# EUROPÄISCHE PATENTSCHRIFT

(11) **EP 1 387 091 B1**
(45) Veröffentlichungstag und Bekanntmachung des Hinweises auf die Patenterteilung: **30.03.2005**
(21) Anmeldenummer: 03008145.9
(22) Anmeldetag: 08.04.2003
(51) Int. Cl.: F16B 5/06, F16B 19/10, F16B 21/08, H05K 5/00, H05K 7/14, B60R 16/02

(54) **Befestigungsvorrichtung**
Fastening device
Dispostif de fixation

(30) Priorität: 02.08.2002 DE 10235339
(43) Veröffentlichungstag der Anmeldung: 04.02.2004
(73) Patentinhaber: ROBERT BOSCH GMBH, 70442 Stuttgart (DE)
(72) Erfinder: Müller, Michael, 71277 Rutesheim (DE); Creek, George, 3178 Rowville, Victoria (AU)

(56) Entgegenhaltungen:
- EP-A- 1 046 825
- WO-A-99/38778
- DE-A- 10 045 728
- DE-A- 19 527 053
- DE-A- 19 725 642
- US-A- 4 828 209

## Beschreibung

### Einsatzgebiet

Die Erfindung bezieht sich auf eine Befestigungsvorrichtung, insbesondere, aber nicht ausschließlich, zur Befestigung einer elektronischen Steuereinheit (ECU) in einem Fahrzeug.

### Hintergrund

Bekannterweise werden ECUs mittels Klemmteilen oder Schrauben befestigt. Jedoch wenn Werkzeuge benutzt werden müssen, um Befestigungsvorrichtungen anzubringen, kann Raummangel im Fahrzeug Einbauschwierigkeiten verursachen und zumindest Im Falle von Befestigungsvorrichtungen des Klemmteiltyps kann ein dadurch entstehender Abstand oder Spielraum zwischen dem Gehäuse der ECU und dem Fahrzeug unerwünschte Vibrationen oder Rattern der ECU verursachen

Mit der WO 99/38778 A1 ist ein Verbindungselement zum Verbinden zweier Teile bekannt geworden, das ein hülsenförmiges Klemmelement aufweist, das in eine Öffnung einer der beiden Teile einrastbar ist. Zur Sicherung gegen ein Lösen des hülsenförmigen Klemmelements wird in dieses ein zylinderförmiges Halteelement eingeführt, wodurch ein Herrausrutschen des Klemmelements aus der Öffnung des Bauteils verhindert werden soll.

### Ziel der Erfindung

Es ist das Ziel der Erfindung eine Befestigungsvorrichtung bereitzustellen, durch welche sich zumindest eine der oben beschriebenen Schwierigkeiten vermeiden lässt.

### Kurze Zusammenfassung

Erfindungsgemäß wird eine Befestigungsvorrichtung bereitgestellt, die ein Verbindungsteil zur Kopplung an einen Gegenstand einschließt, sowie ein Feststellteil zur sicheren Befestigung des Verbindungsteils an dem Gegenstand, dadurch charakterisiert dass das Verbindungsteil einen Klemmteil einschließt zur Durchführung durch eine Öffnung in dem Gegenstand und die Feststellteile in den Klemmteil eingreift, um das Herauslösen des Klemmteils aus der Öffnung zu verhindern.

Bevorzugterweise sind die Feststellteil und das Verbindungsteil einstückig geformt. Bevorzugterweise ist die Feststellteil gelenkig mit dem Verbindungsteil verbunden. Bevorzugterweise ist die Befestigungsvorrichtung einstückig mit einem Körper geformt, an welchem der Gegenstand sicher befestigt wird. Der Körper ist bevorzugterweise ein Gehäuse für eine ECU.

Alternativ ist der Körper ein Bestandteil eines Fahrzeugs, wie z.B. Einfassungen (trimming), und der Gegenstand ist ein Gehäuse für eine ECU.

Bevorzugterweise schliesst die Feststellteil zweite Klemmteilungsmittel ein zur lösbaren Befestigung der Feststellteilen in bezug auf den Klemmteil.

Bevorzugterweise schliesst der Klemmteil zwei Schenkel ein mit entgegengesetzten Einschnitten zur Aufnahme der zweiten Klemmteilungsmittel der Feststellteil.

Alternativ weist der Klemmteil einen einzigen Schenkel auf, der von dem Körper an welchem der Gegenstand befestigt ist, absteht und die Feststellteil ist so angeordnet, dass sie zwischen den Schenkel und den Körper passt.

In einer weiteren Alternative kann der Klemmteil in Form einer Klemmhülse sein, wobei die Feststellteil dann so angeordnet ist, dass sie in die Klemmhülse passt.

Bevorzugterweise schliesst die Feststellteil ein Spreizelement zur Spannung des Klemmteil gegen den Gegenstand ein. Gemäss einer noch mehr bevorzugten Ausführung ist das Spreizelement in Form eines vorstehenden an den Klemmteil anliegenden Teils, welches den Klemmteil gegen den Gegenstand treibt, wenn die Feststellteil in Eingriff steht.

Des weiteren wird ein Gehäuse für eine ECU bereitgestellt, einschliesslich einer wie obenstehend beschriebenen Befestigungsvorrichtung. Bevorzugterweise schliesst das Gehäuse des weiteren eine oder mehrere Haltefedern zur Befestigung des Gehäuses an dem Fahrzeug ein.

### Kurzbeschreibung der Zeichnungen

Die Erfindung wird noch ausführlicher mit bezug auf die beiliegenden Zeichnungen beschrieben wobei die aufgeführten Beispiele nicht als ausschliessliche Realisierungen zu betrachten sind. Die Zeichnungen zeigen in
- Figur 1: eine perspektivische Ansicht einer Befestigungsvorrichtung;
- Figur 2: einen schematischen Querschnitt der Befestigungsvorrichtung gemäss Figur 1 im Eingriffszustand;
- Figur 3: eine schematische perspektivische Ansicht einer anderen Ausführung der Befestigungsvorrichtung;
- Figur 4: einen Grundriss in Perspektive der bevorzugten Ausführung einer Befestigungsvorrichtung, die mit einem ECU Gehäuse verkoppelt ist;
- Figur 5: eine perspektivische Unteransicht einer Befestigungsvorrichtung gemäss Figur 4; und
- Figur 6: eine perspektivische Ansicht einer Haltefeder des in Figuren 4 und 5 gezeigten Gehäuses.

### Ausführliche Beschreibung

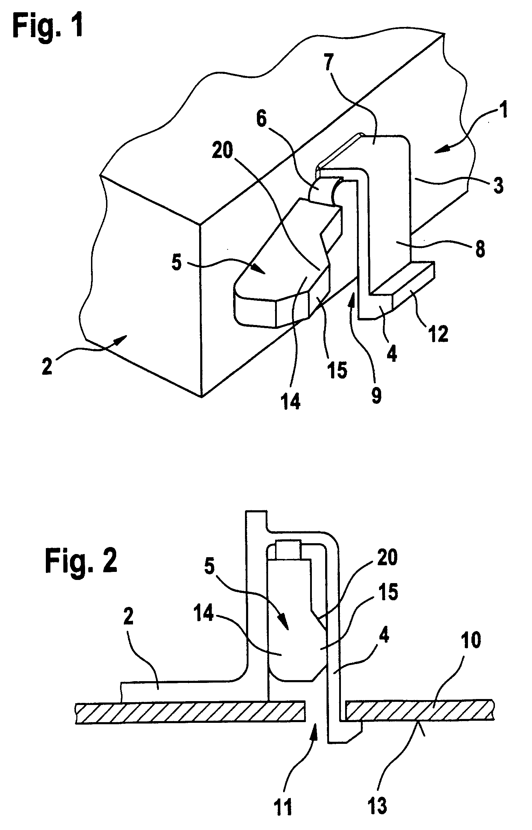

Zuerst wird auf Figuren 1 und 2 Bezug genommen, wo eine Befestigungsvorrichtung gezeigt ist, die mit einem Körper 2 verbunden ist. Die Befestigungsvorrichtung 1 hat ein Verbindungsteil 3 enclusive in Form eines Klemmteils 4 und eine einstückig damit geformte Feststellteil 5, welche mit dem Klemmteil 4 über Gelenk 6 gekoppelt ist. Das Verbindungsteil 3 weist auch einen seitlichen Steg 7 zwischen dem Körper 2 und einem Schenkel 8 des Klemmteils 4 auf, wodurch ein Zwischenraum 9 gebildet wird, in welchen die Feststellteil 5 eingefügt werden kann.

Um den Körper 2 in bezug auf einen Gegenstand 10, wie z.B. eine Klemmteilung oder Einfassung in einem Fahrzeugs zu sichern, wird eine gegenüberliegende Seite (nicht gezeigt) des Körpers 2 in bezug auf den Gegenstand 10 gesichert und der Klemmteil 4 wird durch eine Öffnung 11 durchgeführt, so dass eine Krempe 12 mit einer Unterseite 13 des Gegenstands in Eingriff kommt. Die Feststellteil 5 wird dann von der in Figur 1 gezeigten Stellung zwischen dem Gehäuse und dem Klemmteil 4 geschwenkt. Ein Spreizelement 14, in Form eines seitlichen Überstands 15, liegt an dem Klemmteil 4 an und treibt ihn so dass er in Eingriff mit dem Gegenstand 10 kommt, wodurch die Befestigungsvorrichtung in bezug auf den Gegenstand sicher befestigt ist. Der Überstand 15 dient auch als eine Art zweites Klemmteilungsmittel 20, um die Rückwärtsbewegung der Feststellteil 5 zu hemmen.

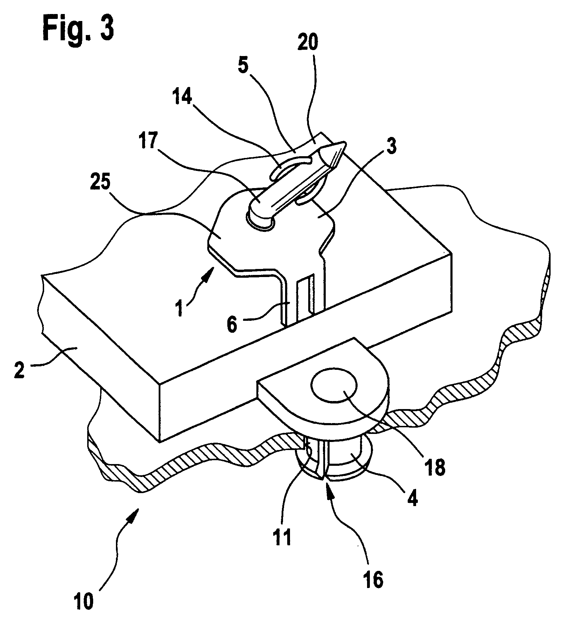

Ein ähnliches Konzept liegt der Ausführung der in Figur 3 gezeigten Befestigungsvorrichtung 1 zugrunde, wo die entsprechenden schon in Figuren 1 und 2 gezeigten Teile sind mit denselben Referenznummern bezeichnet sind. Der Klemmteil 4 ist in Form einer radial ausdehnbaren Klemmhülse 16 und die Feststellteil 5 ist in Form eines Zapfens 17, der auch ein zweites Klemmteilungsmittel 20 und ein Spreizelement 14 aufweist, um den Klemmteil 4 gegen eine in Gegenstand 10 bereitgestellte Öffnung 11 zu spannen, wenn der Zapfen 17 in eine zentrale Aussparung 18 des Klemmteils 4 eingeführt wird.

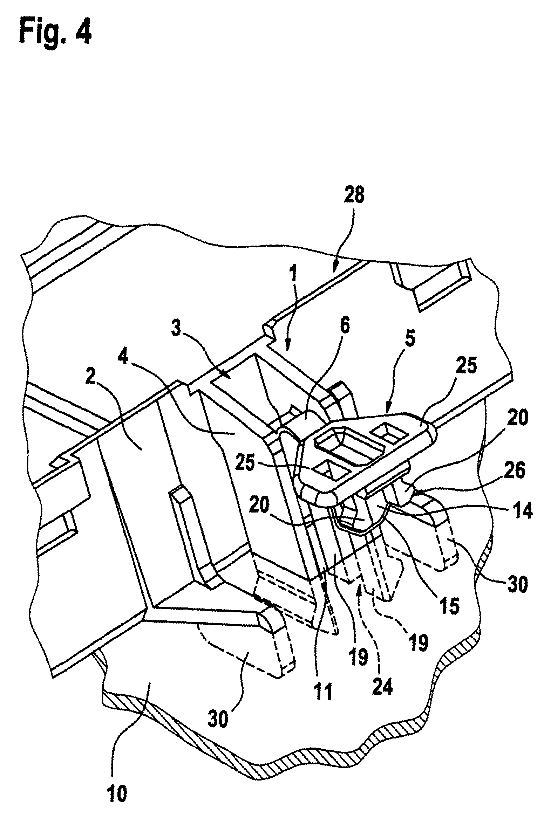

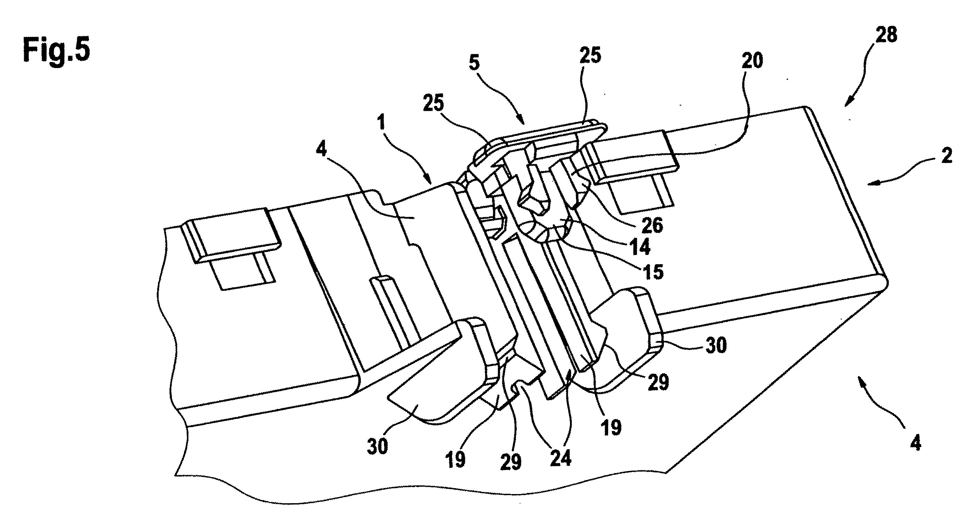

Eine weitere Form der Befestigungsvorrichtung 1 wird in Figuren 4 und 5 gezeigt, wo wiederum die den in Figuren 1 und 2 gezeigten entsprechenden Teile mit denselben Referenznummern bezeichnet sind. In diesem Fall wird der Klemmteil 4 durch zwei Schenkel 19 geformt und die Feststellteil 5 beinhaltet ein separates Spreizelement 14 und zweite Klemmteilungsmittel 20. Die Feststellteil 5 ist mit dem Klemmteil 4 über ein Gelenk 6 verkoppelt, so dass er von der gezeigten Stellung in einen gesperrten Zustand durch Abwärtsdrehen der Feststellteil 5 bewegbar ist, so dass er zwischen die Schenkel 19 des Klemmteils 4 zu liegen kommt. Wenn die Feststellteil 5 in Eingriff gebracht wird, liegt das Spreizelement 14, das in Form eines angeformten Überstands 15 ausgebildet ist, an die Schenkel 19 an und treibt sie auseinander, während das zweite Klemmteilungsmittel 20 in entgegengesetzten länglichen Einschnitten 24 aufgenommen wird. Wenn die Feststellteil 5 voll im Eingriff steht, werden die Schenkel 19 dadurch auseinander gespreizt und können nicht zurück in eine Freigabestellung bewegt werden, ohne dass zuerst die Feststellteil 5 entfernt wird. Um die Handhabung der Feststellteil 5 zu erleichtern, können seitliche Flügel 25 bereitgestellt werden. Auch ist das zweite Klemmteilungsmittel 21 mit doppelten Fasen 26 ausgerüstet, um eine einfache Feststellteil und Entsperrung der Feststellteil 5 in bezug auf den erstrangigen Klemmteil 4 zu ermöglichen.

Die Befestigungsvorrichtung 1 ist einstückig mit dem Körper 2 geformt, der bevorzugterweise in Form eines Gehäuses 28 der ECU ist, um eine leichte manuelle Verbindung der ECU mit einem Gegenstand 10, wie z.B. einem Fahrzeug, zu ermöglichen, wobei der Klemmteil 4 so angeordnet ist, dass er durch eine entsprechende Öffnung 11 in Fahrzeugfassungen oder dergleichen durchgeführt werden kann.

Um die Handhabung des Ein- und Ausbaus des Gehäuses 28 zu erleichtern, wird der erstrangige Klemmteil 4 bevorzugterweise mit doppelten Fasen 29 ausgerüstet. Des weiteren, um die Befestigungsvorrichtung 1 vor Beschädigung durch unvorsichtige Handhabung oder gegen Fallen des ECU-Gehäuses zu schützern, können seitliche Begrenzungskanten 30 angrenzend an die Befestigungsvorrichtung 1 bereitgestellt werden. Die seitlichen Begrenzungskanten 30 können auch zur Lagerung und Festsetzung des Gehäuses 28 dienen.

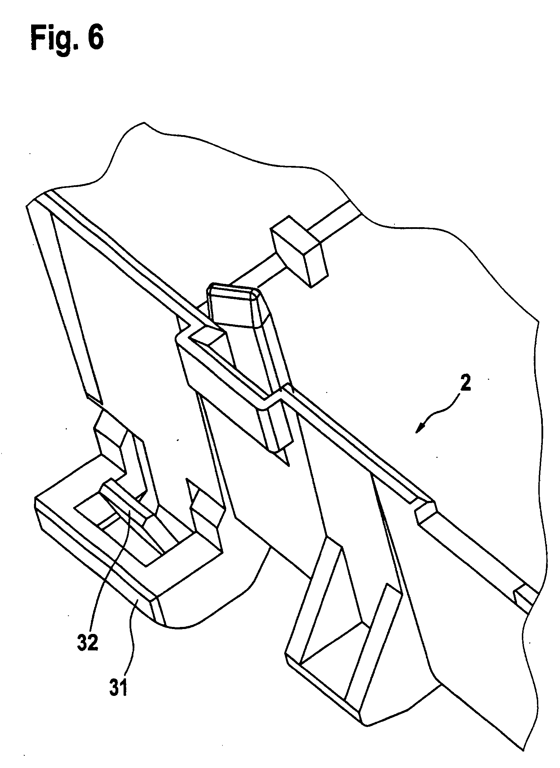

Wie in Figur 6 gezeigt, kann der Körper 2 auch mit einem geeigneten Befestigungsansatz 31 und Haltefeder 32 an einer beliebigen geeigneten Stelle ausgerüstet sein, wie z.B. an der Seite des ECU-Gehäuses, die der Seite, an welcher die Befestigungsvorrichtung 1 befestigt ist, gegenüberliegt. Dank der Kombination der Haltefeder 32 zusammen mit der Gestaltung der Befestigungsvorrichtung 1 kann die ECU manuell ohne die Benutzung von Werkzeugen angebracht werden, und des weiteren wird minimale Vibration aufgrund der Vermeidung eines Abstands oder Spielraums zwischen dem Gehäuse und der Fahrzeugkarosserie erzielt.

Als eine weitere Alternative zu der in Figuren 4 bis 6 gezeigten Konstruktion ist es möglich, die Befestigungsvorrichtung 1 auf einem Körper 2 bereitzustellen, welcher selbst ein Bestandteil des Fahrzeugs selbst ist, wie z.B. Einfassungen (trimming), und der dazugehörige Gegenstand 10 wäre dann in Form des Gehäuses 28 der ECU.

Obwohl die Erfindung mit besonderem Bezug auf Verwendung zur Befestigung einer ECU in einem Fahrzeug beschrieben worden ist, sollte natürlich nicht daraus geschlossen werden, dass die Befestigungsvorrichtung auf diese Anwendung allein beschränkt ist.

### Bezugszeichen

- 1: Befestigungsvorrichtung
- 2: Körper
- 3: Verbindungsteil
- 4: Klemmteil
- 5: Feststellteil
- 6: Gelenk
- 7: Steg
- 8: Schenkel
- 9: Zwischenraum
- 10: Gegenstand
- 11: Öffnung
- 12: Krempe
- 13: Unterseite
- 14: Spreizelement
- 15: Überstand
- 16: Klemmhülse
- 17: Zapfen
- 18: Aussparung
- 19: Schenkel
- 20: zweites Klemmteilungsmittel
- 24: Einschnitte
- 25: Flügel
- 26: Fasen
- 28: Gehäuse
- 29: doppelte Fasen
- 30: Begrenzungskanten
- 31: Ansatz
- 32: Haltefeder

## Patentansprüche

1. Befestigungsvorrichtung (1) mit einem Verbindungsteil (3) zur Kopplung an einen Gegenstand (10), und mit einem Feststellteil (5) ur sicheren Befestigung des Verbindungsteils an dem Gegenstand (10), wobei das Verbindungsteil (3) ein Klemmteil (4) einschließt zur Durchführung durch eine Öffnung (11) in dem Gegenstand (10) und das Feststellteil (5) in das Klemmteil (4) eingreift, um das Herauslösen des Klemmteils (4) aus der Öffnung (11) zu verhindern, **dadurch gekennzeichnet, dass** das Klemmteil (4) zwei Schenkel (19) mit gegenüberliegenden Einschnitten (24) zur Aufnahme von zweiten Klemmteilungsmittel (20) des Feststellteils (5) einschließt, wobei die zweiten Klemmteilungsmittel (20) zur lösbaren Befestigung des Feststellteils (5) in bezug auf das Klemmteil (4) dienen.

2. Befestigungsvorrichtung (1) nach Anspruch 1, bei welcher das Feststellteil (5) und das Verbindungsteil (3) einstückig geformt sind.

3. Befestigungsvorrichtung (1) nach Anspruch 1 oder 2, bei welcher das Feststellteil (5) gelenkig mit dem Verbindungsteil (3) verbunden ist.

4. Befestigungsvorrichtung (1) nach einem der Ansprüche 1 bis 3, bei welcher die Befestigungsvorrichtung (1) einstückig mit einem Körper (2) geformt ist, an welchem der Gegenstand (10) sicher befestigt werden soll.

5. Befestigungsvorrichtung (1) nach Anspruch 4, bei welcher der Körper (2) ein Gehäuse (28) für eine ECU ist.

6. Befestigungsvorrichtung (1) nach Anspruch 4, bei welcher der Körper (2) ein Bestandteil eines Fahrzeugs ist, und der Gegenstand ein Gehäuse (28) für eine ECU ist.

7. Befestigungsvorrichtung nach Anspruch 1, bei welcher das Klemmteil (4) einen einzigen Schenkel (8) aufweist, der von dem Körper (2), an welchem der Gegenstand befestigt werden soll, absteht und das Feststellteil (5) so angeordnet ist, dass es zwischen den Schenkel (8) und den Körper (2) passt.

8. Befestigungsvorrichtung (1) nach Anspruch 1, bei welcher das Klemmteil (4) in Form einer Klemmhülse (16) ausgebildet ist, und das Feststellteil (5) so angeordnet ist, dass es in die Klemmhülse (16) passt.

9. Befestigungsvorrichtung (1) nach einem der vorhergehenden Ansprüche, bei welcher das Feststellteil (5) ein Spreizelement (14) zur Spannung des Klemmteils (4) gegen den Gegenstand (10) aufweist.

10. Befestigungsvorrichtung (1) nach Anspruch 9, bei welcher das Spreizelement (14) in Form eines an dem Klemmteil (4) anliegenden vorstehenden Teils (15) ausgebildet ist, welches das Klemmteil (4) gegen den Gegenstand (10) treibt, wenn das Feststellteil (5) in Eingriff steht.

11. Befestigungsvorrichtung (1) nach einem der vorhergehenden Ansprüche, bei welcher das Feststellteil (5) mit seitlichen Flügeln (25) zwecks leichterer manueller Handhabung des Feststellteils (5) ausgerüstet ist.

12. Ein Gehäuse (28) für eine ECU einschließlich einer Befestigungsvorrichtung (1) nach Anspruch 1.

13. Ein Gehäuse (28) nach Anspruch 12, welches des weiteren eine oder mehrere Haltefedern (32) zur Befestigung des Gehäuses (28) an dem Fahrzeug einschließt.

## Claims

1. Fastening device (1) having a connecting part (3) for coupling to an object (10), and a fixing part (5) for the secure fastening of the connecting part to the object (10), the connecting part (3) including a clamping part (4) for passing through an opening (11) in the object (10) and the fixing part (5) engaging in the clamping part (4) in order to prevent the clamping part (4) from being released from the opening (11), **characterized in that** the clamping part (4) includes two limbs (19) having opposite incisions (24) for receiving second clamping dividing means (20) of the fixing part (5), the second clamping dividing means (20) serving for the releasable fastening of the fixing part (5) in relation to the clamping part (4).

2. Fastening device (1) according to Claim 1, in which the fixing part (5) and the connecting part (3) are formed as a single piece.

3. Fastening device (1) according to Claim 1 or 2, in which the fixing part (5) is connected in an articulated manner to the connecting part (3).

4. Fastening device (1) according to one of Claims 1 to 3, in which the fastening device (1) is formed as a single piece with a body (2) to which the object (10) is to be securely fastened.

5. Fastening device (1) according to Claim 4, in which the body (2) is a housing (28) for an ECU.

6. Fastening device (1) according to Claim 4, in which the body (2) is part of a vehicle, and the object of a housing (28) for an ECU.

7. Fastening device according to Claim 1, in which the clamping part (4) has a single limb (8) which protrudes from the body (2) to which the object is to be fastened, and the fixing part (5) is arranged in such a manner that it fits between the limb (8) and the body (2).

8. Fastening device (1) according to Claim 1, in which the clamping part (4) is designed in the form of a clamping sleeve (16), and the fixing part (5) is arranged in such a manner that it fits into the clamping sleeve (16).

9. Fastening device (1) according to one of the preceding claims, in which the fixing part (5) has an expanding element (14) for clamping the clamping part (4) against the object (10).

10. Fastening device (1) according to Claim 9, in which the expanding element (14) is designed in the form of a protruding part (15) which bears against the clamping part (4) and drives the clamping part (4) against the object (10) when the fixing part (5) is in engagement.

11. Fastening device (1) according to one of the preceding claims, in which the fixing part (5) is equipped with lateral wings (25) for the purpose of easier manual handling of the fixing part (5).

12. Housing (28) for an ECU including a fastening device (1) according to Claim 1.

13. Housing (28) according to Claim 12 which furthermore includes one or more retaining springs (32) for fastening the housing (28) to the vehicle.

## Revendications

1. Dispositif de fixation (1) comportant une pièce de liaison (3) pour être reliée à un objet (10) ainsi qu'une pièce de blocage (5) pour verrouiller la fixation de la pièce de liaison à l'objet (10), la pièce de liaison (3) comprenant une pince (4) pour passer dans une ouverture (11) de l'objet (10) alors que la pièce de blocage (5) coopère avec la pince (4) pour interdire le dégagement de la pince (4) de l'ouverture (11),
**caractérisé en ce que**
la pince (4) comporte deux branches (19) avec des encoches (24), opposées, pour recevoir des seconds moyens de séparation de pince (20) de la pièce de blocage (5), les seconds moyens de séparation de pince (20) servant à la fixation amovible de la pièce de blocage (5) par rapport à la pince (4).

2. Dispositif de fixation (1) selon la revendication 1,
**caractérisé en ce que**
la pièce de blocage (5) et la pièce de liaison (3) sont réalisées en une seule partie.

3. Dispositif de fixation (1) selon les revendications 1 ou 2,
**caractérisé en ce que**
la pièce de blocage (5) est articulée à la pièce de liaison (3).

4. Dispositif de fixation (1) selon l'une des revendications 1 à 3,
**caractérisé en ce que**
le dispositif de fixation (1) est formé en une seule pièce avec un support (2) auquel doit être fixé l'objet (10).

5. Dispositif de fixation (1) selon la revendication 4,
**caractérisé en ce que**
le corps (2) comporte un boîtier (28) pour une unité ECU.

6. Dispositif de fixation (1) selon la revendication 4,
**caractérisé en ce que**
le corps (2) fait partie d'un véhicule et l'objet est un boîtier (28) pour une unité ECU.

7. Dispositif de fixation selon la revendication 1,
**caractérisé en ce que**
la pince (4) comporte une unique branche (8) en saillie du corps (2) auquel on veut fixer l'objet et la pièce de blocage (5) s'adapte entre la branche (8) et le corps (2).

8. Dispositif de fixation (1) selon la revendication 1,
**caractérisé en ce que**
la pince (4) a la forme d'un manchon de pince (16) et la pièce de blocage (5) est adaptée au manchon de pince (16).

9. Dispositif de fixation (1) selon l'une des revendications précédentes,
**caractérisé en ce que**
la pièce de blocage (5) comporte un élément d'écartement (14) pour serrer la pince (4) contre l'objet (10).

10. Dispositif de fixation (1) selon la revendication 9,
**caractérisé en ce que**
l'élément d'écartement (14) a la forme d'une pièce (15) en saillie appliquée contre la pince (4) et poussant la pince (4) contre l'objet (10) lorsque la pièce de blocage (5) est en prise.

11. Dispositif de fixation (1) selon l'une des revendications précédentes,
**caractérisé en ce que**
la pièce de blocage (5) comporte des ailes latérales (25) pour faciliter la manoeuvre de la pièce de blocage (5).

12. Boîtier (28) pour une unité ECU comprenant un dispositif de fixation (1) selon la revendication 1.

13. Boîtier (28) selon la revendication 12,
**caractérisé par**
en outre un ou plusieurs ressorts de retenue (32) pour fixer le boîtier (28) au véhicule.
